Europäisches Patentamt

European Patent Office

Office européen des brevets

(19)

(11)     **EP 0 858 677 B1**

(12)     **FASCICULE DE BREVET EUROPEEN**

(45) Date de publication et mention
de la délivrance du brevet:
**05.12.2001   Bulletin 2001/49**

(51) Int Cl.$^7$: **H01M 4/48**

(21) Numéro de dépôt: **97932884.6**

(86) Numéro de dépôt international:
**PCT/FR97/01261**

(22) Date de dépôt: **10.07.1997**

(87) Numéro de publication internationale:
**WO 98/02928 (22.01.1998 Gazette 1998/03)**

(54) **ELECTRODE RECHARGEABLE AU LITHIUM POUR GENERATEUR ELECTROCHIMIQUE**

ELEKTRODE FÜR WIEDERAUFLADBAREN LITHIUMENTHALTENDEN ELEKTROCHEMISCHEN
STROMGENERATOR

LITHIUM RECHARGEABLE ELECTRODE FOR ELECTROCHEMICAL GENERATOR

(84) Etats contractants désignés:
**DE ES FI FR GB IE IT NL SE**

(30) Priorité:  **12.07.1996  FR 9608752**

(43) Date de publication de la demande:
**19.08.1998   Bulletin 1998/34**

(73) Titulaire: **SAFT**
**F-93230 Romainville (FR)**

(72) Inventeurs:
• **BIENSAN, Philippe**
  **F-91360 Epinay sur Orge (FR)**
• **GALLET, Damien**
  **F-93390 Clichy sous Bois (FR)**
• **SIMON, Bernard**
  **F-92130 Issy les Moulineaux (FR)**

(74) Mandataire: **Laroche, Danièle**
**COMPAGNIE FINANCIERE ALCATEL**
**Département Propriété Industrielle**
**30, avenue Kléber**
**75116 Paris (FR)**

(56) Documents cités:
**EP-A- 0 581 290**          **EP-A- 0 651 450**
**EP-A- 0 712 172**          **EP-A- 0 744 780**
**WO-A-94/29915**          **GB-A- 2 270 195**

Remarques:
Le dossier contient des informations techniques
présentées postérieurement au dépôt de la
demande et ne figurant pas dans le présent
fascicule.

**Description**

La présente invention concerne une électrode de générateur électrochimique rechargeable au lithium, et plus particulièrement le matériau électrochimiquement actif qu'elle contient.

Les oxydes lithiés de métaux de transition de formule générale $Li_x M_y O_t$ sont connus comme matériau actif utilisable dans les générateurs au lithium, mais leurs performances doivent encore être améliorées. Plus particulièrement des efforts sont nécessaires pour améliorer la stabilité de la capacité cyclée de ces matériaux tout en conservant une capacité initiale élevée.

Pour stabiliser la capacité en cyclage de l'électrode, le brevet américain US-4,668,595 propose d'utiliser un oxyde alcalin d'un métal de transition contenant un des éléments suivants: Al, In, ou Sn. Ces éléments abaissent la tension de décharge, et par conséquent diminuent l'énergie initiale.

Dans un oxyde de nickel lithié, d'autres auteurs ont envisagé de substituer partiellement au nickel un élément comme Ti, V, Mn, Fe (EP-0 554 906) ou bien encore Co ou Cr (EP-0 468 942 et EP-0 554 649). La capacité de ces matériaux diminue rapidement au cours du cyclage.

La demande de brevet européen EP-0 630 064 propose un oxyde lithié de formule générale $Li_x A_y M_z J_m O_p$ où A est Na et/ou K, M est Ni, Co, et/ou Mn, et J est B, Si, Ge, P, V, Zr, Sb, ou Ti.

Les améliorations obtenues avec ces matériaux ne portent que sur un seul aspect de leurs performances au détriment des autres.

La présente invention a pour but de proposer un matériau électrochimiquement actif possédant une capacité spécifique initiale élevée et stable au cours du cyclage, particulièrement à des températures supérieures à la température ambiante.

L'objet de la présente invention est une électrode positive de générateur électrochimique rechargeable au lithium contenant un matériau électrochimiquement actif de formule générale

$$Li_x M_y A_m D_z O_t$$

avec:

$$0,8 \leq x \leq 1,2 \qquad 0 < z \leq 0,3 \qquad 1,8 \leq t \leq 4,2$$

$$(0,8 - m - z) \leq y \leq (2,2 - m - z) \qquad 0 < m \leq 0,3$$

où M est au moins un métal de transition choisi parmi le nickel, le cobalt, le manganèse et le fer, A est un élément choisi parmi le magnésium et le calcium, et D est au moins un élément choisi parmi le titane et l'étain.

Dans la formule Li désigne le lithium et O est l'oxygène. Les éléments dopants D sont introduits en substitution d'une partie du métal de transition M qui défini la structure du matériau.

L'élément dopant peut être choisi parmi les éléments des groupes 4b à 5a de la classification périodique; par élément des groupes 4b à 5a de la classification périodique (HANDBOOK of CHEMISTRY and PHYSICS, 46ème Edition), on entend les éléments compris entre Ti, Zr, etc..., et Sb, Bi.

De préférence il peut être au moins un métal choisi parmi le titane, le zirconium, le vanadium, le chrome, le molybdène, le cuivre, le zinc, le cadmium, l'aluminium, le gallium, et l'étain.

Selon l'invention D est au moins un élément choisi parmi le titane et l'étain.

De préférence encore M est un mélange de métaux de transition choisi parmi le nickel, le cobalt, le manganèse et le fer, et contenant majoritairement du nickel.

Selon un premier mode de réalisation, on a dans la formule générale $0,90 \leq x \leq 1,05$.

Selon un deuxième mode de réalisation, on a dans la formule générale $(0,90 - m - z) \leq y \leq (1,05 - m - z)$.

Selon un troisième mode de réalisation, on a dans la formule générale $0 < z \leq 0,2$ .

Selon un quatrième mode de réalisation, on a dans la formule générale $0 < m \leq 0,2$ .

Selon un cinquième mode de réalisation, on a dans la formule générale $(m + z) \leq 0,2$ .

La présente invention a aussi pour objet un procédé de fabrication d'un matériau électrochimiquement actif destiné à être utilisé dans une électrode de générateur électrochimique rechargeable au lithium. Ce procédé comporte les étapes suivantes:

- on réalise un mélange comportant au moins un composé du lithium d'une part et au moins un composé oxydé d'au moins un métal de transition M et d'un élément A choisi parmi le magnésium et le calcium d'autre part,

- on broie le mélange, puis on le traite thermiquement en atmosphère oxydante, par exemple sous air ou sous oxygène.

De préférence, ledit composé du lithium est choisi parmi l'hydroxyde de lithium ou lithine LiOH (H$_2$O), le carbonate de lithium Li$_2$CO$_3$, le nitrate de lithium LiNO$_3$, l'oxyde de lithium Li$_2$O, et leurs mélanges.

De préférence ledit composé oxydé est choisi parmi un oxyde, un hydroxyde, un oxyhydroxyde et leurs mélanges.

Selon une première forme d'exécution, ledit mélange est environ équimolaire, c'est à dire que le nombre de moles de lithium (nLi), du métal de transition M (nM), de l'élément désigné par A (nA) et de l'élément désigné par D (nD) sont reliés par la relation:

$$\frac{nLi}{nM+nA+nD} \approx 1$$

Ce mélange conduit à une structure du type Li$_x$ M A$_m$ D$_z$ O$_2$, dérivée par exemple de LiNiO$_2$, LiCoO$_2$, LiFeO$_2$, LiMnO$_2$, etc...

Selon une deuxième forme d'exécution, ledit mélange est contient environ deux fois plus de moles de lithium que du composé oxydé, c'est à dire que le nombre de moles de lithium (nLi), du métal de transition M (nM), de l'élément désigné par A (nA) et de l'élément désigné par D (nD) sont reliés par la relation:

$$\frac{nLi}{nM+nA+nD} \approx 2$$

Ce mélange conduit à une structure du type Li$_x$ M$_2$ A$_m$ D$_z$ O$_4$, dérivée par exemple de LiNi$_2$O$_4$, LiCo$_2$O$_4$, LiMn$_2$O$_4$, etc...

De préférence ledit traitement thermique est effectué à une température comprise entre 600°C et 750°C pendant une durée comprise entre 2 heures et 20 heures.

Après synthèse, le matériau peut être à nouveau broyé si nécessaire pour l'amener à la granulométrie souhaitée.

La présente invention a aussi pour objet un générateur électrochimique rechargeable au lithium comportant au moins une électrode négative, au moins une électrode positive et un électrolyte. Ledit générateur comprend une électrode positive selon l'invention et ladite électrode négative comprend une matière électrochimiquement active choisie parmi le lithium métallique, les alliages du lithium et un matériau capable d'insérer réversiblement des ions lithium dans sa structure, comme par exemple les carbones (graphite, carbone vitreux, coke) sous forme de poudre ou de fibres, ou les oxydes métalliques.

De préférence ledit électrolyte se compose d'un sel de lithium en solution dans un solvant non-aqueux. Ledit sel est choisi parmi le perchlorate de lithium LiClO$_4$, l'hexafluoroarsénate de lithium LiAsF$_6$, l'hexafluorophosphate de lithium LiPF$_6$, le tétrafluoroborate de lithium LiBF$_4$, le trifluorométhanesulfonate de lithium LiCF$_3$SO$_3$, le trifluorométhanesulfonimide de lithium LiN(CF$_3$SO$_2$)$_2$ (LiTFSI), ou le trifluorométhanesulfoneméthide de lithium LiC(CF$_3$SO$_2$)$_3$ (LiTFSM). Ledit solvant est constitué d'un mélange d'éthers et/ou d'esters. Les esters sont par exemple choisis parmi les carbonates linéaires et les carbonates cycliques de plus de 4 atomes de carbone, comme le carbonate de propylène (PC), d'éthylène (EC), de butylène, de diéthyle (DEC) ou de diméthyle (DMC).

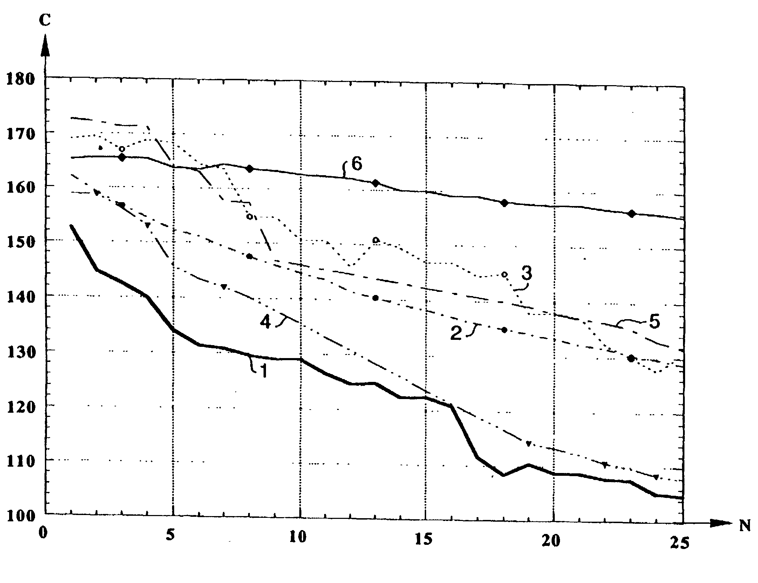

D'autres caractéristiques et avantages de la présente invention apparaîtront au cours des exemples suivants de réalisation donnés bien entendu à titre illustratif et non limitatif, et sur la figure unique qui montre l'évolution de la capacité spécifique C des matériaux en mAh/g en fonction du nombre de cycles N.

EXEMPLE 1

On prépare un matériau I de référence à partir d'un mélange équimolaire de lithine LiOH (H$_2$O) et d'oxyde de nickel NiO. Le mélange est broyé, puis traité thermiquement à 700°C sous air pendant 10 heures. Après synthèse, le matériau est à nouveau broyé pour l'amener à la granulométrie souhaitée.

EXEMPLE 2

On prépare un matériau II de référence à partir d'un mélange équimolaire de lithine LiOH (H$_2$O) et d'hydroxyde de nickel Ni(OH)$_2$, préparé par exemple par précipitation d'une solution de nitrate de nickel en milieu basique. Le mélange est broyé, puis traité thermiquement à 750°C sous air pendant 5 heures. Après synthèse, le matériau est à nouveau broyé pour l'amener à la granulométrie souhaitée.

EXEMPLE 3

On prépare des matériaux selon l'art antérieur contenant 5% molaire d'un élément dopant et de formule générale:

$$Li_x\ Ni_{0,95}\ D_{0,05}\ O_2$$

Ces matériaux sont fabriqués de la manière décrite dans l'exemple 2, à l'exception du fait qu'on mélange à la lithine le composé $Ni_{0,95}\ D_{0,05}\ (OH)_2$ qui est un hydroxyde mixte de nickel et d'un élément dopant préparé par précipitation d'une solution de nitrates de nickel et de l'élément dopant en milieu basique.

Les matériaux préparés IIIa à IIIg contiennent respectivement comme élément dopant D: Al, Sn, Ti, Mn, Fe, Cr, et Ge.

EXEMPLE 4

On prépare des matériaux de comparaison IVa à IVc contenant 5% molaire d'un élément dopant D choisi respectivement parmi Cd, Zn et Cu, et de formule générale:

$$Li_x\ Ni_{0,95}\ D_{0,05}\ O_2$$

Ces matériaux sont fabriqués de la manière décrite dans l'exemple 2, à l'exception du fait qu'on mélange à la lithine le composé $Ni_{0,95}\ D_{0,05}\ (OH)_2$ qui est un hydroxyde mixte de nickel et d'un élément dopant préparé par précipitation d'une solution de nitrates de nickel et de l'élément dopant en milieu basique.

EXEMPLE 5

On prépare un matériau V contenant 5% molaire de magnésium, et de formule générale:

$$Li_x\ Ni_{0,95}\ Mg_{0,05}\ O_2$$

Ce matériau est fabriqué de la manière décrite dans l'exemple 2, à l'exception du fait qu'on mélange à la lithine le composé $Ni_{0,95}\ Mg_{0,05}\ (OH)_2$ qui est un hydroxyde de nickel $Ni(OH)_2$ substitué par 5% molaire de magnésium Mg, obtenu par précipitation d'une solution de nitrates de nickel et de magnésium en milieu basique.

EXEMPLE 6

On prépare un matériau VI selon la présente invention contenant 5% molaire de magnésium et 5% molaire de titane, et de formule générale:

$$Li_x\ Ni_{0,90}\ Mg_{0,05}\ Ti_{0,05}\ O_2$$

Ce matériau est fabriqué de la manière décrite dans l'exemple 2, à l'exception du fait qu'on mélange à la lithine le composé $Ni_{0,90}\ Mg_{0,05}\ Ti_{0,05}\ (OH)_2$ qui est un hydroxyde de nickel $Ni(OH)_2$ substitué par 5% molaire de magnésium Mg et 5% molaire de titane Ti obtenu par précipitation d'une solution de nitrates de nickel et de magnésium, et d'un composé oxydé du titane en milieu basique.

EXEMPLE 7

On prépare un matériau VII selon la présente invention contenant 5% molaire de magnésium et 5% molaire d'étain, et de formule générale:

$$Li_x\ Ni_{0,90}\ Mg_{0,05}\ Sn_{0,05}\ O_2$$

Ce matériau est fabriqué de la manière décrite dans l'exemple 2, à l'exception du fait qu'on mélange à la lithine le composé $Ni_{0,90}$ $Mg_{0,05}$ $Ti_{0,05}$ $(OH)_2$ qui est un hydroxyde de nickel $Ni(OH)_2$ substitué par 5% molaire de magnésium Mg et 5% molaire d'étain Sn obtenu par précipitation d'une solution de nitrates de nickel et de magnésium, et d'un composé oxydé de l'étain en milieu basique.

EXEMPLE 8

On étudie l'effet des dopants sur la capacité spécifique des matériaux. Pour cela, on réalise des électrodes contenant respectivement les matériaux préparés précédemment, du carbone pulvérulent et un liant polymère qui assure la tenue mécanique de l'électrode.

Les électrodes sont placées chacune dans un générateur de format "bouton". L'électrolyte est un mélange de carbonate de propylène, de carbonate d'éthylène et de carbonate de diméthyle PC/EC/DMC dans les proportions volumiques 1/1/3, et contenant de l'hexafluorophosphate de lithium $LiPF_6$ à la concentration 1M. La contre-électrode est en lithium métallique.

Un premier cycle est effectué entre 3 Volts et 4,1 Volts avec un courant spécifique de 7mA/g, à température ambiante (25°C). On mesure la capacité chargée Cc lors de la première charge et la capacité Cd déchargée réversiblement à la première décharge. On calcule le rapport R selon la formule:

$$R \ (\%) = \frac{Cc}{Cd} \ x \ 100$$

pour déterminer le rendement R. Les résultats sont donnés dans le tableau I ci-dessous.

TABLEAU I

| Ref. | A | D | Cc | Cd | R |
|------|---|---|----|----|---|
|      |   |   | mAh/g | | % |
| I | - | - | 180 | 145 | 81 |
| II | - | - | 183 | 159 | 87 |
| IIIa | - | Al | 169 | 122 | 72 |
| IIIb | - | Sn | 174 | 154 | 89 |
| IIIc | - | Ti | 184 | 166 | 90 |
| IIId | - | Mn | 174 | 133 | 76 |
| IIIe | - | Fe | 170 | 128 | 75 |
| IIIf | - | Cr | 166 | 122 | 73 |
| IIIg | - | Ge | 158 | 105 | 66 |
| IVa | - | Cd | 179 | 153 | 85 |
| IVb | - | Zn | 181 | 152 | 84 |
| V | Mg | - | 180 | 152 | 84 |
| VI | Mg | Ti | 178 | 166 | 93 |
| VII | Mg | Sn | 180 | 154 | 86 |

Les matériaux de référence I et II préparés par des procédés différents conduisent à des résultats comparables et du même niveau que les meilleurs matériaux de ce type décrit dans la littérature. La capacité cyclable réversiblement représente plus de 80% de la capacité de première charge.

Les matériaux de l'art antérieur ont au premier cycle une capacité cyclable réversiblement qui est inférieure à celle des matériaux de référence (145mAh/g), à l'exception des matériaux IIIb et IIIc: 154mAh/g et 166mAh/g.

Parmi les matériaux IIIa à IIIg de l'art antérieur, seuls les matériaux IIIb et IIIc ont un rendement supérieur à 80%.

Les matériaux IVa, IVb et V donnent des résultats au moins égaux à ceux des matériaux de référence.

Les matériaux VI et VII selon l'invention ont un rendement supérieur à 80%.

EXEMPLE 9

On étudie l'effet des dopants sur la stabilité de la capacité des matériaux en cyclage. Pour cela, on réalise des électrodes de la manière décrite dans l'exemple 8. Les électrodes sont placées chacune dans un générateur de format "bouton" comme décrit dans l'exemple 8. Le faible serrage de l'électrode dans ces générateurs rend ce test particulièrement sélectif en accélérant la manifestation d'une baisse de performance au fur et à mesure du cyclage.

Le cyclage est effectué dans des conditions analogues à celles données dans l'exemple 8, à l'exception du fait qu'il est réalisé à une température de 60°C afin d'en accélérer le vieillissement. On mesure la capacité déchargée C1 au premier cycle et la capacité déchargée C25 après 25 cycles. On calcule alors la perte de capacité P selon la formule:

$$P\ (\%) = \frac{C1 - C25}{C1} \times 100$$

Les résultats sont donnés dans le tableau II ci-dessous.

TABLEAU II

| Ref. | A | D | C1 | C25 | P | Ref. |
|------|---|---|----|-----|---|------|
|      |   |   | mAh/g | | % | fig. |
| I | - | - | 155 | 100 | 35 | - |
| II | - | - | 150 | 105 | 30 | 1 |
| IIIb | - | Sn | 163 | 127 | 22 | - |
| IIIc | - | Ti | 165 | 125 | 24 | 2 |
| IVa | - | Cd | 169 | 131 | 22 | 3 |
| IVb | - | Zn | 162 | 107 | 34 | 4 |
| IVc | - | Cu | 172 | 133 | 23 | 5 |
| V | Mg | - | 165 | 148 | 10 | - |
| VI | Mg | Ti | 165 | 156 | 5 | 6 |
| VII | Mg | Sn | 165 | 157 | 5 | - |

On observe que l'ajout d'un dopant, comme Sn, Ti, Cd, Cu, abaisse la perte de capacité à des valeurs comprises entre 10% et 25% par rapport aux matériaux de référence I et II non dopés pour lesquels les pertes de capacité sont de l'ordre de 30-35%.

Les matériaux VI et VII selon l'invention présentent des pertes de capacité de l'ordre de 5%.

**Revendications**

**1.** Electrode positive de générateur électrochimique rechargeable au lithium contenant un matériau électrochimiquement actif de formule générale

$$Li_x\ M_y\ A_m\ D_z\ O_t$$

avec:

$$0,8 \leq x \leq 1,2 \qquad 0 < z \leq 0,3 \qquad 1,8 \leq t \leq 4,2$$

$$(0,8 - m - z) \leq y \leq (2,2 - m - z) \qquad 0 < m \leq 0,3$$

où M est au moins un métal de transition choisi parmi le nickel, le cobalt, le manganèse et le fer, A est un élément choisi parmi le magnésium et le calcium, et D est au moins un élément choisi parmi le titane et l'étain.

2. Electrode selon la revendication 1, dans laquelle M est un mélange de métaux de transition choisi parmi le nickel, le cobalt, le manganèse et le fer, et contenant majoritairement du nickel.

3. Electrode selon l'une des revendications précédentes, dans laquelle $0,90 \leq x \leq 1,05$.

4. Electrode selon l'une des revendications précédentes, dans laquelle $(0,90 - m - z) \leq y \leq (1,05 - m - z)$ .

5. Electrode selon l'une des revendications précédentes, dans laquelle $0 < z \leq 0,2$ .

6. Electrode selon l'une des revendications précédentes, dans laquelle $0 < m \leq 0,2$.

7. Electrode selon l'une des revendications précédentes, dans laquelle $(m + z) \leq 0,2$ .

8. Procédé de fabrication d'une électrode selon l'une des revendications précédentes, comprenant les étapes suivantes d'élaboration dudit matériau:

   - on réalise un mélange comportant au moins un composé du lithium d'une part, et au moins un composé oxydé d'au moins un métal de transition et d'un élément choisi parmi le magnésium et le calcium d'autre part,
   - on broie le mélange, puis on le traite thermiquement en atmosphère oxydante.

9. Procédé selon la revendication 8, dans lequel ledit composé du lithium est choisi parmi l'hydroxyde de lithium, le carbonate de lithium, le nitrate de lithium, l'oxyde de lithium, et leurs mélanges.

10. Procédé selon l'une des revendications 8 et 9, dans lequel ledit composé oxydé est choisi parmi un oxyde, un hydroxyde, un oxyhydroxyde et leurs mélanges.

11. Procédé selon l'une des revendications 8 à 10, dans lequel ledit composé oxydé comporte en outre au moins un élément choisi parmi le titane et l'étain.

12. Procédé selon l'une des revendications 8 à 11, dans lequel ledit mélange est environ équimolaire.

13. Procédé selon l'une des revendications 8 à 12, dans lequel ledit mélange contient environ deux fois plus de moles de lithium que du composé oxydé.

14. Procédé selon l'une des revendications 8 à 13, dans lequel ledit traitement thermique est effectué à une température comprise entre 600°C et 750°C pendant une durée comprise entre 2 heures et 20 heures.

15. Générateur électrochimique rechargeable au lithium comportant au moins une électrode négative, au moins une électrode positive selon l'une des revendications 1 à 7 et un électrolyte, dans lequel ladite électrode négative comprend une matière électrochimiquement active choisie parmi le lithium métallique, les alliages du lithium et un matériau capable d'insérer réversiblement des ions lithium dans sa structure.

16. Générateur selon la revendication 15, dans lequel ledit électrolyte se compose d'un sel de lithium en solution dans un solvant non-aqueux, ledit sel étant choisi parmi le perchlorate de lithium, l'hexafluoroarsénate de lithium, l'hexafluorophosphate de lithium, le tétrafluoroborate de lithium, le trifluorométhanesulfonate de lithium, le trifluorométhanesulfonimide de lithium, ou le trifluorométhanesulfoneméthide de lithium, et ledit solvant étant constitué d'un mélange d'éthers et/ou d'esters.

**Patentansprüche**

1. Positive Elektrode für einen wiederaufladbaren, elektrochemischen Lithiumgenerator, welche ein elektrochemisch aktives Material der allgemeinen Formel

$$Li_x M_y A_m D_z O_t$$

mit:

$$0,8 \leq x \leq 1,2 \qquad 0 \leq z \leq 0,3 \qquad 1,8 \leq t \leq 4,2$$

$(0,8 - m - z) \leq y \leq (2,2 - m - z) \qquad 0 < m \leq 0,3$ enthält, worin M wenigstens ein aus Nickel, Kobalt, Mangan und

Eisen gewähltes Übergangsmetall, A ein aus Magnesium und Kalzium gewähltes Element, und D wenigstens ein aus Titan und Zinn gewähltes Element ist.

2. Elektrode nach Anspruch 1, bei welcher M eine aus Nickel, Kobalt, Mangan und Eisen gewählte Mischung aus Übergangsmetallen ist, welche hauptsächlich Nickel enthält.

3. Elektrode nach einem der vorhergehenden Ansprüche, bei welcher $0,90 \leq x \leq 1,05$ ist.

4. Elektrode nach einem der vorhergehenden Ansprüche, bei welcher $(0,90 - m - z) \leq y \leq (1,05 - m - z)$ ist.

5. Elektrode nach einem der vorhergehenden Ansprüche, bei welcher $0 \leq z \leq 0,2$ ist.

6. Elektrode nach einem der vorhergehenden Ansprüche, bei welcher $0 < m \leq 0,2$ ist.

7. Elektrode nach einem der vorhergehenden Ansprüche, bei welcher $(m + z) \leq 0,2$ ist.

8. Verfahren zur Herstellung einer Elektrode nach einem der vorhergehenden Ansprüche, welches die folgenden Schritte zur Herstellung des Materials umfasst:

   - man stellt eine Mischung her, die einerseits wenigstens eine Lithiumverbindung und andererseits wenigstens eine oxidierte Verbindung wenigstens eines Übergangsmetalls und ein aus Magnesium und Kalzium gewähltes Element umfasst,
   - man zerkleinert die Mischung, und behandelt sie dann thermisch in einer oxidierenden Atmosphäre.

9. Verfahren nach Anspruch 8, bei welchem die Lithiumverbindung aus Lithiumhydroxid, Lithiumcarbonat, Lithiumnitrat, Lithiumoxid, und deren Mischungen gewählt ist.

10. Verfahren nach einem der Ansprüche 8 und 9, bei welchem die oxidierte Verbindung aus einem Oxid, einem Hydroxid, einem Oxyhydroxid und deren Mischungen gewählt ist.

11. Verfahren nach einem der Ansprüche 8 bis 10, bei welchem die oxidierte Verbindung ferner wenigstens ein aus Titan und Zinn gewähltes Element aufweist.

12. Verfahren nach einem der Ansprüche 8 bis 11, bei welchem die Mischung ungefähr äquimolar ist.

13. Verfahren nach einem der Ansprüche 8 bis 12, bei welchem die Mischung ungefähr zweimal mehr Mole Lithium als oxidierte Verbindung enthält.

14. Verfahren nach einem der Ansprüche 8 bis 13, bei welchem die thermische Behandlung bei einer Temperatur zwischen 600°C und 750°C für einen Zeitraum zwischen 2 Stunden und 20 Stunden erfolgt.

15. Wiederaufladbarer elektrochemischer Lithiumgenerator mit wenigstens einer negativen Elektrode, wenigstens einer positiven Elektrode nach einem der Ansprüche 1 bis 7 und einem Elektrolyten, bei welchem die negative Elektrode ein elektrochemisch aktives Material aufweist, das aus metallischem Lithium, Lithiumlegierungen und einem Material, das geeignet ist, Lithiumionen reversibel in seine Struktur einzufügen, gewählt ist.

16. Generator nach Anspruch 15, bei welchem der Elektrolyt aus einem in einem nichtwäßrigen Lösungsmittel gelösten

**EP 0 858 677 B1**

Lithiumsalz besteht, wobei das Salz aus Lithiumperchlorat, Lithiumhexafluoroarsenat, Lithiumhexafluorophosphat, Lithiumtetrafluoroborat, Lithiumtrifluoromethansulfonat, Lithiumtrifluoromethansulfonimid oder Lithiumtrifluoromethansulfonmethid gewählt ist, und das Lösungsmittel aus einer Mischung aus Ethern und/oder Estern besteht.

**Claims**

1. A positive electrode for a rechargeable lithium cell, containing an electrochemically active material with general formula:

$$Li_xM_yA_mD_zO_t$$

where:

$$0.8 \leq x \leq 1.2 \qquad 0 < z \leq 0.3 \qquad 1.8 \leq t \leq 4.2$$

$$(0.8 - m - z) \leq y \leq (2.2 - m - z) \qquad 0 < m \leq 0.3$$

where M is at least one transition metal selected from nickel, cobalt, manganese, and iron, A is an element selected from magnesium and calcium, and D is at least one element selected from titanium and tin.

2. An electrode according to claim 1, in which M is a mixture of transition metals selected from nickel, cobalt, manganese, and iron, and contains mainly nickel.

3. An electrode according to any one of the preceding claims, in which $0.90 \leq x \leq 1.05$.

4. An electrode according to any one of the preceding claims, in which:

$$(0.90 - m - z) \leq y \leq (1.05 - m - z).$$

5. An electrode according to any one of the preceding claims, in which $0 < z \leq 0.2$.

6. An electrode according to any one of the preceding claims, in which $0 < m \leq 0.2$.

7. An electrode according to any one of the preceding claims, in which $(m + z) \leq 0.2$.

8. A process for the production of an electrode according to any one of the preceding claims, comprising the following steps for manufacture of said material:

   · forming a mixture comprising at least one lithium compound and at least one oxygen-containing compound of at least one transition metal and of an element selected from magnesium and calcium;
   · grinding the mixture, then heat treating it in an oxidizing atmosphere.

9. A process according to claim 8, in which said lithium compound is selected from lithium hydroxide, lithium carbonate, lithium nitrate, lithium oxide, and mixtures thereof.

10. A process according to claim 8 or claim 9, in which said oxygen-containing compound is selected from an oxide, a hydroxide, an oxyhydroxide and mixtures thereof.

11. A process according to any one of claims 8 to 10, in which said oxygen-containing compound further comprises at least one element selected from titanium and tin.

12. A process according to any one of claims 8 to 11, in which said mixture is approximately equimolar.

9

**13.** A process according to any one of claims 8 to 12, in which said mixture contains approximately twice as many moles of lithium as oxygen-containing compound.

**14.** A process according to any one of claims 8 to 13, in which said heat treatment is carried out at a temperature in the range 600°C to 750°C for a period in the range 2 hours to 20 hours.

**15.** A rechargeable lithium cell comprising at least one negative electrode, at least one positive electrode according to any one of claims 1 to 7, and an electrolyte, in which said negative electrode comprises an electrochemically active material selected from lithium metal, lithium alloys and a material which can reversibly intercalate lithium ions into its structure.

**16.** A cell according to claim 15, in which said electrolyte is composed of a lithium salt in solution in a non-aqueous solvent, said salt being selected from lithium perchlorate, lithium hexafluoroarsenate, lithium hexafluorophosphate, lithium tetrafluoroborate, lithium trifluoromethanesulfonate, lithium trifluoromethanesulfonimide, and lithium trifluoromethanesulfonemethide, and said solvent is constituted by a mixture of ethers and/or esters.

EP 0 858 677 B1